# FASCICULE DE BREVET EUROPEEN

(11) **EP 2 163 457 B1**
(45) Date de publication et mention de la délivrance du brevet: **21.03.2018**
(21) Numéro de dépôt: 09169941.3
(22) Date de dépôt: 10.09.2009
(51) Int. Cl.: B62D 5/065

(54) **Procédé de stratégie de réduction de la consommation d'énergie d'un véhicule automobile**
Strategieverfahren zur Verringerung des Energieverbrauchs eines Kraftfahrzeugs
Method and strategy for reducing the power consumption of an automobile

(30) Priorité: 11.09.2008 FR 0856125
(43) Date de publication de la demande: 17.03.2010
(73) Titulaire: JTEKT HPI, 94430 Chennevieres sur Marne (FR)
(72) Inventeur: Chapeau, Sébastien, 94420, LE PLESSIS TREVISE (FR); Aubert, Yohann, 94500, CHAMPIGNY SUR MARNE (FR)
(74) Mandataire: Thinat, Michel

(56) Documents cités:
- EP-A- 0 962 378
- EP-A1- 0 978 439
- EP-A2- 0 972 695
- WO-A-02/40338
- FR-A- 2 843 780

## Description

L'invention concerne un procédé de stratégie de réduction de la consommation d'énergie d'un véhicule automobile comprenant un système de direction assistée équipé d'un dispositif électro-pompe comprenant une pompe et un moteur électrique d'entraînement en rotation de la pompe et adapté pour établir des valeurs de consigne de vitesse du groupe électro-pompe en fonction de la vitesse du véhicule et de la vitesse du volant et destinées à être appliquées au groupe électro-pompe lors d'un mode de fonctionnement dit normal.

Des procédés de ce type sont déjà connus, par exemple du document EP 0 978 439 A1, mais n'assurent qu'une réduction partielle de la consommation d'énergie, notamment de l'énergie électrique consommée par le groupe électro-pompe.

L'invention a pour but de pallier cet inconvénient.

Pour atteindre ce but, le procédé selon l'invention est caractérisé en ce que l'on définit au moins un mode de fonctionnement spécifique supplémentaire au cours duquel est réduit la vitesse du groupe électro-pompe avantageusement jusqu'à un niveau où le conducteur n'en ressent pas encore une gêne lors de la conduite et fait appliquer au groupe électro-pompe ces valeurs de vitesse de consigne appropriées lorsque le véhicule fonctionne selon ce mode de fonctionnement spécifique. L'invention est définie par les caractéristiques techniques de la revendication 1.

La gêne évitée par la présente invention se manifesterait par le surcouple que le conducteur devrait appliquer au volant lors de manoeuvres demandant un changement rapide de la position angulaire du volant, par exemple lorsqu'il doit subitement éviter un obstacle.

Selon une caractéristique supplémentaire de l'invention, les paramètres de fonctionnement du véhicule sont la vitesse du véhicule, la vitesse et la position angulaires du volant.

Selon une autre caractéristique de l'invention, on prévoit à titre de mode spécifique un mode dit veille et l'entrée dans ce mode à partir du mode normal est définie par un seuil bas de vitesse de véhicule prédéterminé, une valeur de seuil de courant du moteur électrique, qui est fonction de la vitesse du véhicule, et une gamme de l'angle du volant.

Selon encore une autre caractéristique de l'invention, la sortie du mode veille et le retour au mode normal est effectué lorsque le courant du moteur électrique est égal ou supérieur à une valeur de seuil, ou la position angulaire absolue du volant est comprise entre deux valeurs prédéterminées ou la vitesse angulaire du volant est égale ou supérieure à une vitesse prédéterminée.

Selon encore une autre caractéristique de l'invention, on prévoit un mode dit arrêt et l'entrée dans ce mode, à partir du mode normal se fait lorsque la vitesse du véhicule est inférieure à une faible vitesse prédéterminée, le courant du moteur est inférieur ou égal à une valeur de seuil et la position angulaire du volant se trouve dans une gamme de faibles valeurs prédéterminée et la consigne de vitesse donnée au groupe électro-pompe spécifique de ce mode est l'arrêt du moteur électrique.

Selon encore une autre caractéristique de l'invention, la sortie du mode arrêt et le retour au mode normal sont effectués lorsque la vitesse du véhicule est supérieure ou égale à une faible valeur de vitesse prédéterminée ou la position angulaire du volant se trouve en dehors d'une gamme de valeurs prédéterminée.

Selon encore une autre caractéristique de l'invention, on prévoit un passage entre le mode veille et le mode arrêt à des paramètres de fonctionnement du véhicule prédéterminés.

Selon encore une autre caractéristique de l'invention, on prévoit un mode dit butée dont l'entrée à partir du mode normal est faite lorsque la vitesse du véhicule est inférieure à une faible valeur prédéterminée, le courant du moteur est supérieur à une valeur de seuil et la position angulaire du volant est égale ou supérieure à une valeur d'angle importante prédéterminée.

Selon encore une autre caractéristique de l'invention, la consigne de vitesse consiste en une valeur de vitesse de rotation du groupe électro-pompe en fonction de valeurs de position angulaire du volant.

Selon encore une autre caractéristique de l'invention, la sortie du mode butée et le retour au mode normal se font lorsque la vitesse du véhicule est égale ou supérieure à une valeur prédéterminée ou la position angulaire du volant est inférieure à une valeur prédéterminée ou la vitesse du volant est supérieure à une valeur prédéterminée.

Selon encore une autre caractéristique de l'invention, la valeur de consigne de vitesse est donnée au groupe électro-pompe lorsque les conditions d'entrée dans ce mode sont vérifiées pendant une durée de temps prédéterminée, sauf pour le mode butée.

Selon encore une autre caractéristique de l'invention, la faible valeur de vitesse prédéterminée du véhicule est la même pour les modes de fonctionnement spécifiques.

L'invention sera mieux comprise, et d'autres buts, caractéristiques, détails et avantages de celle-ci apparaîtront plus clairement dans la description explicative qui va suivre et qui est faite en référence aux dessins schématiques annexés donnés uniquement à titre d'exemple illustrant plusieurs modes de réalisation de l'invention et dans lesquels :
- la figure 1 illustre schématiquement la détermination de la consigne de vitesse du groupe électro-pompe, selon le procédé proposé par l'invention ;
- la figure 2 illustre sous forme d'un schéma bloc l'interrelation des différents modes de fonctionnement, selon le procédé proposé par l'invention ;
- la figure 3 illustre schématiquement le passage entre le mode de fonctionnement normal et le mode de fonctionnement spécifique dit "veille", conformément au procédé selon l'invention ;
- la figure 4 illustre schématiquement le passage entre le mode de fonctionnement normal et le mode de fonctionnement spécifique dit "arrêt", conformément au procédé selon l'invention ;
- la figure 5 illustre schématiquement le passage entre le mode spécifique "veille" et le mode spécifique "arrêt", et
- la figure 6 illustre schématiquement le passage entre le mode normal et le mode spécifique dit "butée", conformément au procédé selon l'invention.

L'invention concerne des véhicules automobiles équipés d'un système de direction assistée notamment électro-hydraulique. Un tel système comprend typiquement une pompe destinée à envoyer du liquide sous pression, habituellement de l'huile, dans un vérin hydraulique qui produit alors un couple d'assistance à appliquer à la colonne de direction. La pompe est entraînée en rotation par un moteur électrique et l'ensemble formé par la pompe et le moteur est appelé groupe électro-pompe (GEP).

Les valeurs de consigne de vitesse du GEP sont déterminées en fonction de la vitesse du véhicule automobile et de la vitesse angulaire du volant de commande de la colonne de direction et sont établies pour différentes paires de ces deux valeurs. La vitesse du véhicule et la vitesse angulaire du volant sont établies par mesures à l'aide de capteurs appropriés de vitesse du véhicule et du déplacement angulaire de la colonne de direction.

La table I indique les valeurs de consigne, en tours ou rotations par minute, de la vitesse à donner au groupe électro-pompe, plus précisément au moteur électrique de celui-ci, associées à différentes paires de valeurs de vitesse du véhicule et du volant. La table I donne des valeurs considérées comme reflétant le fonctionnement normal. A partir de cette table, le système détermine la valeur de consigne pour une paire de valeurs de fonctionnement du véhicule, qui sera alors appliquée au GEP lorsque les capteurs de vitesse du véhicule et du volant mesurent ces deux valeurs relatives au fonctionnement du véhicule. Ce tableau a été établi dans un souci de réduction de la consommation d'énergie, notamment électrique du GEP.

L'invention est fondée sur la découverte que, dans certains modes de fonctionnement spécifiques, la consommation d'énergie (électrique) par le moteur électrique du GEP et du carburant par le moteur thermique peut être réduite considérablement par abaissement de la vitesse de rotation du moteur électrique, sans que le conducteur en ressente une gêne.

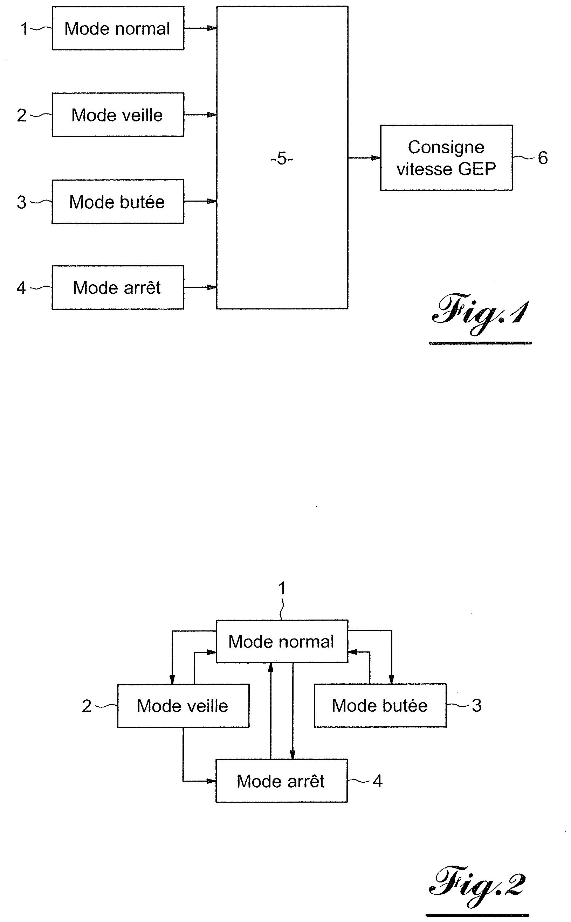

On décrira ci-après ces modes particuliers en les spécifiant par leurs paramètres caractéristiques. Ainsi, à titre d'exemple non limitatif, trois modes de fonctionnement sont définis, à savoir un mode dit "veille", un mode dit "arrêt" et un mode dit "butée", dont la figure 2 illustre l'interrelation.

Sur la figure 1, les cases 1, 2, 3, 4 représentent respectivement le fonctionnement en mode normal, en mode veille, en mode butée et en mode arrêt. Les quatre modes sont reliés à un sélectionneur de mode 5 qui, en fonction des données de fonctionnement mesurées en temps réel sur le véhicule, sélectionne parmi les quatre modes possibles le mode qui correspond à ces données et qui transmet alors au groupe électro-pompe la valeur de vitesse de consigne représentative du mode sélectionné, comme l'illustre la case 6 de consigne vitesse GEP.

Plus précisément, conformément à la figure 2, l'invention prévoit la possibilité d'un passage dans les deux sens, entre le mode normal 1 et le mode veille 2, entre le mode normal 1 et le mode arrêt 4 et entre le mode normal 1 et le mode butée 3. De plus, il est prévu un passage simple du mode veille 2 au mode arrêt 4. Les différents passages possibles sont indiqués par des lignes fléchées.

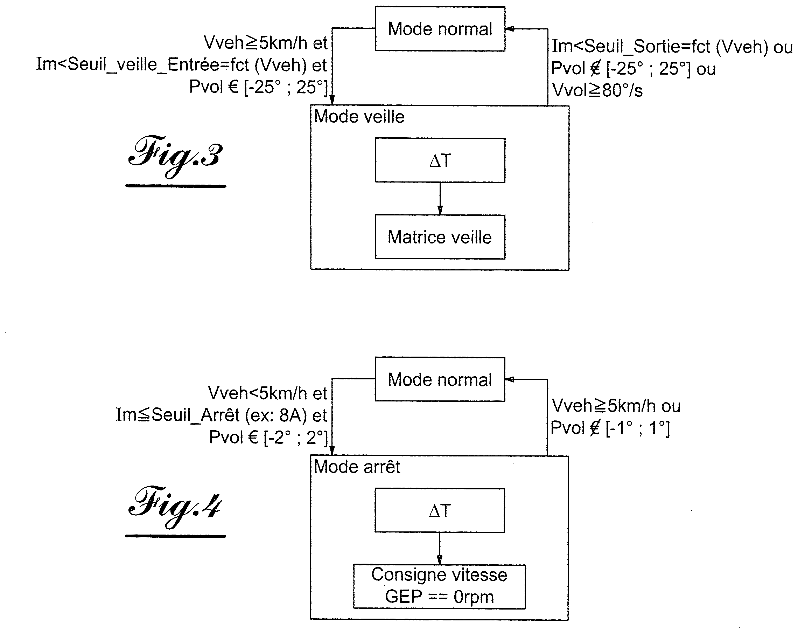

La figure 3 représente spécifiquement le passage entre le mode normal et le mode veille, et indique les conditions qui déterminent ce passage. Trois conditions déterminent le passage du mode normal au mode "VEILLE". Le passage, c'est-à-dire l'entrée dans ce mode veille, a lieu lorsque la vitesse Vᵥₑₕ du véhicule est égale ou supérieure à 5 km/h, le courant Iₘ du moteur électrique du GEP est inférieur à une valeur de seuil et la valeur de la position angulaire Pᵥₒₗ absolue du volant est comprise entre - 25° et + 25°. La valeur de seuil du courant est fonction de la vitesse du véhicule. La table II donne, à titre d'exemple, des valeurs de la vitesse du véhicule Vᵥₑₕ en km/h et du seuil de courant associé en Ampère (A). Cette table donne donc le seuil du courant pour l'entrée dans le mode veille. La table permet, par interpolation linéaire, de déterminer le seuil de courant associé à chaque valeur de vitesse du véhicule. Les valeurs peuvent être fixes ou recalculées en cours de mission. Il est à noter que les valeurs n'ont été données qu'à titre d'exemple.

Si les conditions d'entrée dans le mode veille sont vérifiées, l'invention prévoit une phase de temporisation ΔT de lancement de la phase veille. Le mode est mis en place lorsque les trois conditions d'entrée ont été vérifiées pendant le temps de temporisation. Dans l'affirmative, le procédé selon l'invention commande l'application des valeurs de consigne de vitesse spécifiques du mode veille au groupe électro-pompe. Ces valeurs sont établies à partir de la table III qui représente la matrice "veille". Cette matrice indique les valeurs de consigne en fonction de la vitesse du véhicule Vᵥₑₕ et la position angulaire Pᵥₒₗ du volant.

Le procédé selon l'invention prévoit la sortie du mode veille et le retour au mode normal lorsque l'une des trois conditions suivantes est constatée, soit le courant du moteur électrique est égal ou supérieur à la valeur de seuil de sortie du mode veille, soit la position angulaire absolue du volant est en dehors d'une plage comprise entre -25° et +25°, soit la vitesse angulaire du volant est égale ou supérieure à 80°/s. La valeur de seuil du courant est fonction de la vitesse du véhicule et est indiquée par la table IV. Cette valeur peut être fixe ou recalculée en cours de mission.

La figure 4 illustre le passage entre le mode normal et le mode arrêt en indiquant les conditions d'entrée dans ce mode et de sortie de celui-ci. Pour passer du mode normal au mode arrêt, il faut que la vitesse Vᵥₑₕ du véhicule soit inférieure à 5 km/h, le courant Iₘ du moteur électrique soit inférieur ou égal au seuil arrêt qui est par exemple de 8 Ampères et la position angulaire relative du volant soit comprise entre -2° et +2°. Le mode arrêt est lancé après une période de temporisation ΔT et la consigne de vitesse est forcée à 0 rpm (nombre de rotations par minute), ce qui signifie l'arrêt du moteur électrique. La sortie du mode arrêt et le retour au mode normal se fait lorsque la vitesse du véhicule est égale ou supérieure à 5 km/h ou la position angulaire relative Pᵥₒₗ du volant est en dehors d'une plage comprise entre -1° et +1°.

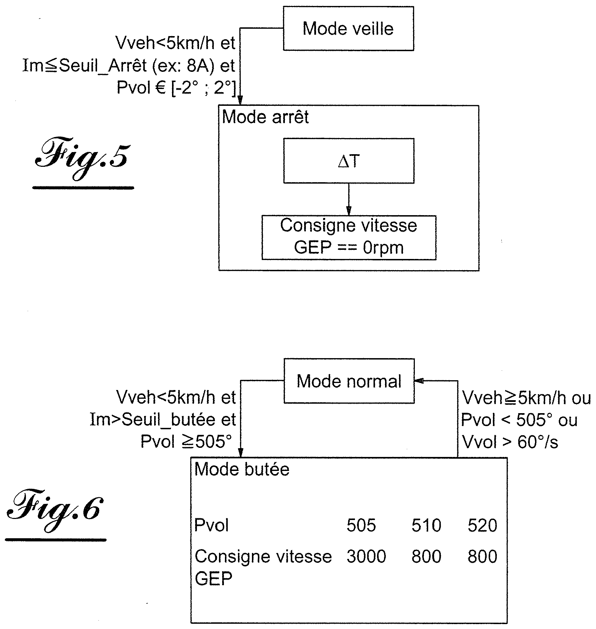

La figure 5 concerne l'interrelation entre le mode veille et le mode arrêt. Lorsque le véhicule fonctionne selon le mode veille, et la vitesse du véhicule Vᵥₑₕ est inférieure à 5 km/h et le courant Im du moteur électrique est inférieur ou égal au seuil arrêt (par exemple 8A) et la position angulaire relative du volant est comprise entre -2° et + 2°, le mode arrêt est lancé, après une période de temporisation ΔT. La consigne de vitesse est forcée à 0 rpm, c'est-à-dire arrêt du moteur. Le retour se fait au mode normal comme cela est indiqué dans la description de la figure 4.

La figure 6 illustre le passage entre le mode normal et le mode butée. L'entrée dans le mode butée se fait sans temporisation ΔT, lorsque la vitesse du véhicule Vᵥₑₕ est inférieure à 5 km/h et le courant Iₘ du moteur électrique est supérieur à la valeur de seuil butée qui est par exemple de 50A et la position du volant est supérieure ou égale à 505°. Le mode butée prévoit alors, en fonction de la position angulaire du volant Pᵥₒₗ de 505°, 510°, 520°, la consigne de vitesse respectivement de 3000, 800 et 800 rpm, comme cela est indiqué. La sortie du mode butée et le retour au mode normal est opéré lorsque la vitesse du véhicule Vᵥₑₕ est supérieure ou égale à 5 km/h ou la position angulaire du volant Pᵥₒₗ est inférieure à 505° ou la vitesse angulaire Vᵥₒₗ du volant est supérieure à 60°/s.

Bien entendu, toutes les valeurs qui ont été données ci-avant sont données à titre d'exemple et d'autres valeurs pourraient être retenues, à la condition cependant que la réduction de la vitesse de rotation du moteur électrique du groupe électro-pompe n'occasionne pas une gêne sensible pour le conducteur ou soit ressentie comme telle par celui-ci.

En effet, les valeurs de consigne pour la vitesse de rotation du moteur électrique du groupe électro-pompe doivent être déterminées de façon que la réactivité du système de direction assistée lors d'un changement du mode de fonctionnement ne soit pas dégradée. En termes pratiques, cela signifie que la vitesse de rotation du moteur électrique du groupe électro-pompe ne doit pas être réduite à un point tel que le système de direction assistée ne saurait plus réagir assez vite. La gêne que le conducteur ressentirait alors consisterait en un effort supérieur qu'il devrait produire pour pouvoir tourner le volant très vite, par exemple lorsqu'il s'agit d'éviter un obstacle se dressant subitement devant le véhicule.

L'invention permet de faire des économies d'énergie considérables sans qu'une telle gêne ne soit produite. Ceci est confirmé par des essais avec le même véhicule, une fois en faisant fonctionner celui-ci selon le mode normal et ensuite selon les modes de fonctionnement spécifiques définis par l'invention. En mode normal, on a constaté une consommation de courant moyenne de 3,83 ampères, une tension moyenne au cours de l'essai de 14,09 volts, ce qui donne une puissance moyenne consommée de 54 W. En fonctionnement selon l'invention, la consommation de courant moyenne était de 0,72 A, la tension moyenne au cours de l'essai de 13,88 volts et la puissance moyenne consommée de 10 W. Ainsi, en appliquant l'invention, un gain moyen sur le cycle normalisé (connu de l'homme de l'art sous les termes type NMVEG) de 44 W a été obtenu.

**TABLE I**

| VITESSE VEHICULE (Vᵥₑₕ) en km/h | | | | | | | | |
|---|---|---|---|---|---|---|---|---|
| | | 0 | 30 | 70 | 90 | 110 | 140 | 200 |
| VITESSE VOLANT | 0 | 2500 | 3500 | 2300 | 2000 | 1610 | 1225 | 1025 |
| en °/s | 25 | 2500 | 3500 | 2300 | 2000 | 1610 | 1225 | 1025 |
| | 50 | 2500 | 3500 | 2300 | 2000 | 1610 | 1225 | 1025 |
| | 100 | 2500 | 3500 | 2300 | 2000 | 1610 | 1225 | 1025 |
| | 300 | 2800 | 4600 | 4600 | 4200 | 4000 | 4000 | 3500 |
| | 500 | 4000 | 4700 | 4700 | 4650 | 4390 | 4130 | 3920 |
| | 750 | 4700 | 4700 | 4700 | 4700 | 4700 | 4700 | 4750 |
| | | | | | | | | |
| | | 5167 | 5167 | 5167 | 5167 | 5167 | 5167 | 5167 |

| | | | | | | | | |
|---|---|---|---|---|---|---|---|---|
| Valeurs de consigne en rpm | | | | | | | | |

**TABLE III**

| • Matrice Veille | | VITESSE VEHICULE (Vᵥₑₕ) en km/h | | | | | |
|---|---|---|---|---|---|---|---|
| | | 5 | 25 | 50 | 100 | 140 | 180 |
| POSITION VOLANT (Pᵥₒₗ) en ° | -25 | 6000 | 6000 | 6000 | 6000 | 6000 | 6000 |
| | -20 | 6000 | 6000 | 6000 | 1909 | 1430 | 1395 |
| | -15 | 3000 | 3000 | 2000 | 1243 | 1150 | 973 |
| | -12 | 2370 | 2360 | 1770 | 1151 | 1080 | 885 |
| | -10 | 2000 | 2000 | 1610 | 1120 | 1040 | 858 |
| | -7 | 1500 | 1500 | 1500 | 1080 | 984 | 827 |
| | -5 | 1300 | 1300 | 1150 | 1070 | 950 | 816 |
| | -2 | 1100 | 1100 | 1000 | 1054 | 907 | 802 |
| | 0 | 1000 | 1000 | 1000 | 1000 | 900 | 800 |
| | 2 | 1100 | 1100 | 1000 | 1054 | 907 | 802 |
| | 5 | 1300 | 1300 | 1150 | 1070 | 950 | 816 |
| | 7 | 1500 | 1500 | 1500 | 1080 | 984 | 827 |
| | 10 | 2000 | 2000 | 1610 | 1120 | 1040 | 858 |
| | 12 | 2370 | 2360 | 1770 | 1151 | 1080 | 885 |
| | 15 | 3000 | 3000 | 2000 | 1243 | 1150 | 973 |
| | 20 | 6000 | 6000 | 6000 | 1909 | 1430 | 1395 |
| | 25 | 6000 | 6000 | 6000 | 6000 | 6000 | 6000 |

| | | | | | | | |
|---|---|---|---|---|---|---|---|
| Valeurs de consigne en rpm | | | | | | | |

**TABLE II**

| | | | | | | |
|---|---|---|---|---|---|---|
| Vitesse véhicule (km/h) | 5 | 25 | 50 | 100 | 140 | 180 |
| Seuil_ veille_Entrée (A) | 8 | 8 | 7 | 7 | 6 | 5 |

**TABLE IV**

| | | | | | | |
|---|---|---|---|---|---|---|
| Vitesse véhicule (km/h) | 5 | 25 | 50 | 100 | 140 | 180 |
| Seuil_ veille_ Sortie (A) | 4 | 4 | 3 | 3 | 3 | 3 |

## Revendications

1. Procédé de stratégie de réduction de la consommation d'énergie d'un véhicule automobile comprenant un système de direction assistée équipé d'un groupe électro-pompe comprenant une pompe et un moteur électrique d'entraînement en rotation de la pompe et adapté pour établir et appliquer au groupe électro-pompe des valeurs de vitesse du groupe électro-pompe en fonction de paramètres du fonctionnement du véhicule en mode de fonctionnement dit normal, lorsque le conducteur du véhicule actionne le volant de conduite, et en mode veille lorsque le conducteur n'actionne pas le volant, **caractérisé en ce que**, en mode veille, on applique au groupe électro-pompe des valeurs de vitesse qui sont prises dans une table de valeur (III) où ces valeurs sont inscrites comme valeurs de consigne qui ont été établies préalablement en réduisant aux mêmes paramètres de fonctionnement du véhicule le courant du groupe électro-pompe à une valeur à laquelle l'effort que le conducteur doit appliquer au volant lors d'un nouvel actionnement du volant, n'augmente pas à une valeur ressentie par le conducteur comme une gêne.

2. Procédé selon la revendication 1 **caractérisé en ce que** les paramètres de fonctionnement du véhicule sont la vitesse du véhicule, la vitesse et la position angulaires du volant.

3. Procédé selon l'une des revendications 1 ou 2, **caractérisé en ce que** l'entrée dans le mode veille, à partir du mode normal, est définie par un seuil bas de vitesse de véhicule prédéterminé, une valeur de seuil de courant du moteur électrique, qui est fonction de la vitesse du véhicule, et une gamme de l'angle du volant.

4. Procédé selon la revendication 3, **caractérisé en ce que** la sortie du mode veille et le retour au mode normal sont effectués lorsque le courant du moteur électrique est égal ou supérieur à une valeur de seuil, ou la position angulaire absolue du volant est comprise entre deux valeurs prédéterminées ou la vitesse angulaire du volant est égale ou supérieure à une vitesse prédéterminée.

5. Procédé selon l'une des revendications 1 à 4, **caractérisé en ce que** l'on prévoit un mode dit arrêt et que l'entrée dans ce mode, à partir du mode normal se fait lorsque la vitesse du véhicule est inférieure à une faible vitesse prédéterminée, le courant du moteur est inférieur ou égal à une valeur de seuil et la position angulaire se trouve dans une gamme de faibles valeurs prédéterminée et **en ce que** la consigne de vitesse donnée au groupe électro-pompe spécifique de ce mode est l'arrêt du moteur électrique.

6. Procédé selon la revendication 5, **caractérisé en ce que** la sortie du mode arrêt et le retour au mode normal est effectué lorsque la vitesse du véhicule est supérieure ou égale à une faible valeur de vitesse prédéterminée ou la position angulaire du volant se trouve en dehors d'une gamme de valeur prédéterminée.

7. Procédé selon l'une des revendications 1 à 6, **caractérisé en ce que** l'on prévoit un passage entre le mode veille et le mode arrêt à des paramètres de fonctionnement du véhicule prédéterminés.

8. Procédé selon l'une des revendications 1 à 7, **caractérisé en ce que** l'on prévoit un mode dit butée dont l'entrée à partir du mode normal est faite lorsque la vitesse du véhicule est inférieure à une faible valeur prédéterminée, le courant du moteur est supérieur à une valeur de seuil et la position angulaire du volant est égale ou supérieure à une valeur d'angle importante prédéterminée.

9. Procédé selon la revendication 8, **caractérisé en ce que** la consigne de vitesse consiste en une valeur de vitesse de rotation du groupe électro-pompe en fonction de valeurs de position angulaire du volant.

10. Procédé selon l'une des revendications 8 ou 9, **caractérisé en ce que** la sortie du mode butée et le retour au mode normal se font lorsque la vitesse du véhicule est égale ou supérieure à une valeur prédéterminée ou la position angulaire du volant est inférieure à une valeur prédéterminée ou la vitesse angulaire du volant est supérieure à une valeur prédéterminée.

11. Procédé selon l'une des revendications 1 à 10, **caractérisé en ce que** la valeur de consigne de vitesse est donnée au groupe électro-pompe lorsque les conditions d'entrée dans un des modes de fonctionnement spécifique sont vérifiées pendant une durée de temps prédéterminée, sauf pour le mode butée.

12. Procédé selon l'une des revendications 2 à 11 **caractérisé en ce que** la faible valeur de vitesse prédéterminée du véhicule est la même pour les modes de fonctionnement spécifiques.

## Patentansprüche

1. Strategieverfahren zur Verringerung des Energieverbrauchs eines Kraftfahrzeugs, umfassend ein Servolenkungssystem, ausgestattet mit einer Elektropumpengruppe, umfassend eine Pumpe und einen Elektromotor für den Rotationsantrieb der Pumpe und ausgebildet, um Geschwindigkeitswerte zu erstellen und auf die Elektropumpengruppe in Abhängigkeit von Betriebsparametern des Fahrzeugs im als normal bezeichneten Betriebsmodus anzuwenden, wenn der Fahrer des Fahrzeugs das Lenkrad betätigt, und im Bereitschaftsmodus, wenn der Fahrer das Lenkrad nicht betätigt, **dadurch gekennzeichnet, dass** im Bereitschaftsmodus auf die Elektropumpengruppe Geschwindigkeitswerte angewendet werden, die einer Wertetabelle (III) entnommen sind, wo diese Werte als Sollwerte eingetragen sind, die zuvor durch Verringern bei denselben Betriebsparameter des Stroms der Elektropumpengruppe auf einen Wert, bei dem die Kraft, die der Fahrer bei einer erneuten Betätigung des Lenkrads auf das Lenkrad ausüben muss, nicht auf einen Wert steigt, der von dem Fahrer als eine Belästigung empfunden wird, ermittelt wurden.

2. Verfahren nach Anspruch 1, **dadurch gekennzeichnet, dass** die Betriebsparameter des Fahrzeugs die Geschwindigkeit des Fahrzeugs, die Geschwindigkeit und die Winkelposition des Lenkrads sind.

3. Verfahren nach einem der Ansprüche 1 oder 2, **dadurch gekennzeichnet, dass** der Eintritt in den Bereitschaftsmodus aus dem Normalmodus durch einen vorbestimmten niedrigen Geschwindigkeitsgrenzwert des Fahrzeugs, einen Stromgrenzwert des Elektromotors als Funktion der Geschwindigkeit des Fahrzeugs und einen Winkelbereich des Lenkrads festgelegt ist.

4. Verfahren nach Anspruch 3, **dadurch gekennzeichnet, dass** das Verlassen des Bereitschaftsmodus und die Rückkehr in den Normalmodus erfolgen, wenn der Strom des Elektromotors gleich oder größer als ein Grenzwert ist oder die absolute Winkelposition des Lenkrads zwischen zwei vorbestimmten Werten inbegriffen ist oder die Winkelgeschwindigkeit des Lenkrads gleich oder größer als eine vorbestimmte Geschwindigkeit ist.

5. Verfahren nach einem der Ansprüche 1 bis 4, **dadurch gekennzeichnet, dass** ein sogenannter Stoppmodus vorgesehen ist und dass der Eintritt in diesen Modus aus dem Normalmodus erfolgt, wenn die Geschwindigkeit des Fahrzeugs unter einer vorbestimmten niedrigen Geschwindigkeit ist, der Strom des Motors unter oder gleich einem Grenzwert ist und sich die Winkelposition in einem Bereich vorbestimmter niedriger Werte befindet und dadurch, dass der für diesen Modus der Elektropumpengruppe vorgegebene Geschwindigkeitssollwert der Stopp des Elektromotors ist.

6. Verfahren nach Anspruch 5, **dadurch gekennzeichnet, dass** das Verlassen des Stoppmodus und die Rückkehr in den Normalmodus erfolgt, wenn die Geschwindigkeit des Fahrzeugs größer oder gleich einem vorbestimmten niedrigen Geschwindigkeitswert ist oder sich die Winkelposition des Lenkrads außerhalb eines vorbestimmten Wertebereichs befindet.

7. Verfahren nach einem der Ansprüche 1 bis 6, **dadurch gekennzeichnet, dass** ein Übergang zwischen dem Bereitschaftsmodus und dem Stoppmodus bei vorbestimmten Betriebsparametern des Fahrzeugs vorgesehen ist.

8. Verfahren nach einem der Ansprüche 1 bis 7, **dadurch gekennzeichnet, dass** ein sogenannter Anschlagmodus vorgesehen ist, dessen Eintritt aus dem Normalmodus erfolgt, wenn die Geschwindigkeit des Fahrzeugs unter einem vorbestimmten niedrigen Wert liegt, der Strom des Motors über einem Grenzwert liegt und die Winkelposition des Lenkrads gleich oder größer als ein vorbestimmter hoher Winkelwert ist.

9. Verfahren nach Anspruch 8, **dadurch gekennzeichnet, dass** der Geschwindigkeitssollwert aus einem Rotationsgeschwindigkeitswert der Elektropumpengruppe in Abhängigkeit von Winkelpositionswerten des Lenkrads besteht.

10. Verfahren nach einem der Ansprüche 8 oder 9, **dadurch gekennzeichnet, dass** das Verlassen des Anschlagmodus und die Rückkehr in den Normalmodus erfolgen, wenn die Geschwindigkeit des Fahrzeugs gleich oder größer als ein vorbestimmter Wert ist oder die Winkelposition des Lenkrads kleiner als ein vorbestimmter Wert ist oder die Winkelgeschwindigkeit des Lenkrads größer als ein vorbestimmter Wert ist.

11. Verfahren nach einem der Ansprüche 1 bis 10, **dadurch gekennzeichnet, dass** der Geschwindigkeitssollwert der Elektropumpengruppe gegeben wird, wenn die Eintrittsbedingungen in einen der spezifischen Betriebsmodi während einer vorbestimmten Zeitdauer überprüft sind, außer für den Anschlagmodus.

12. Verfahren nach einem der Ansprüche 2 bis 11, **dadurch gekennzeichnet, dass** der vorbestimmte niedrige Geschwindigkeitswert des Fahrzeugs für die spezifischen Betriebsmodi derselbe ist.

## Claims

1. A strategy method for reducing the power consumption of a motor vehicle comprising an assisted steering system equipped with an electric pump unit comprising a pump and an electric motor rotating the pump and suitable for establishing and applying, to the electric pump unit, speed values of the electric pump unit as a function of operating parameters of the vehicle in the so-called normal mode, when the driver of the vehicle actuates the steering wheel, and in standby mode when the driver does not actuate the steering wheel, **characterized in that**, in standby mode, speed values are applied to the electric pump unit that are taken from a table of values (III), where these values are recorded as setpoint values that have been established beforehand by reducing, at the same operating parameters of the vehicle, the current of the electric pump group to a value at which the force that the driver must apply to the steering wheel during a new actuation of the steering wheel does not increase to a value felt by the driver as a bother.

2. The method according to claim 1, **characterized in that** the operating parameters of the vehicle are the speed of the vehicle, the speed and the angular position of the steering wheel.

3. The method according to one of claims 1 or 2, **characterized in that** the entry into standby mode, from the normal mode, is defined by a predetermined lower vehicle speed threshold, a current threshold value of the electric motor, which depends on the speed of the vehicle, and a range of the angle of the steering wheel.

4. The method according to claim 3, **characterized in that** the exit from the standby mode and return to the normal mode are done when the current from the electric motor is greater than or equal to a threshold value, or the absolute angular position of the steering wheel is comprised between two predetermined values or the angular speed of the steering wheel is greater than or equal to a predetermined speed.

5. The method according to one of claims 1 to 4, **characterized in that** a so-called stopped mode is provided and that the entry into this mode, from the normal mode, is done when the speed of the vehicle is below a low predetermined speed, the current of the motor is less than or equal to a threshold value and the angular position is in a predetermined range of low values, and **in that** the speed setpoint given to the specific electric pump unit of this mode is the stopping of the electric motor.

6. The method according to claim 5, **characterized in that** the exit from the stopped mode and the return to the normal mode is done when the speed of the vehicle is greater than or equal to a low predetermined speed value or the angular position of the steering wheel is outside a predetermined value range.

7. The method according to one of claims 1 to 6, **characterized in that** a passage is provided between the standby mode and the stopped mode at predetermined operating parameters of the vehicle.

8. The method according to one of claims 1 to 7, **characterized in that** a so-called abutment mode is provided, the entry to which from the normal mode is done when the speed of the vehicle is below a low predetermined value, the current of the motor is above a threshold value and the angular position of the steering wheel is greater than or equal to a large predetermined angle value.

9. The method according to claim 8, **characterized in that** the speed setpoint consists of a rotation speed value of the electric pump unit as a function of angular position values of the steering wheel.

10. The method according to one of claims 8 or 9, **characterized in that** the exit from the abutment mode and the return to the normal mode are done when the speed of the vehicle is greater than or equal to a predetermined value or the angular position of the steering wheel is below a predetermined value or the angular position of the steering wheel is above a predetermined value.

11. The method according to one of claims 1 to 10, **characterized in that** the speed setpoint value is given to the electric pump unit when the conditions for entering one of the specific operating modes are met for a predetermined length of time, except for the abutment mode.

12. The method according to one of claims 2 to 11, **characterized in that** the low predetermined speed value of the vehicle is the same for the specific operating modes.
